Europäisches Patentamt

(19) European Patent Office

Office européen des brevets

(11) Veröffentlichungsnummer: **0 079 851**

**A1**

(12) **EUROPÄISCHE PATENTANMELDUNG**

(21) Anmeldenummer: 82810460.4

(22) Anmeldetag: 29.10.82

(51) Int. Cl.³: **G 01 N 21/89**

(30) Priorität: 04.11.81 GB 8133197

(43) Veröffentlichungstag der Anmeldung:
25.05.83 Patentblatt 83/21

(84) Benannte Vertragsstaaten:
BE CH DE FR GB IT LI

(71) Anmelder: CIBA-GEIGY AG
Patentabteilung Postfach
CH-4002 Basel(CH)

(72) Erfinder: Ikin, John Bruce
40 Marine Avenue
Leigh-on-Sea Essex(GB)

(54) Verfahren und Vorrichtung zur Überprüfung von Bahnmaterial.

(57) Ein Verfahren und eine Vorrichtung zum Überprüfen eines fortbewegten Bahnmaterials umfaßt die kontinuierliche Abtastung der Bahn (5) quer zu ihrer Fortbewegungsrichtung durch einen scharfen schmalen Lichtstrahl (4) sowie das Sammeln der von der Bahn (5) reflektierten oder von ihr durchgelassenen Lichtsignale in einem Lichtempfänger (7), an den eine Photozelle (6) angeschlossen ist, welche die optische Energie in ein elektronisches Signal umwandelt, und die Speicherung der elektronischen Signalinformation aus sequentiellen Abtastungen sowie die Erfassung von Störungen im elektrischen Output des Empfängers (7), welche in mehreren aufeinander folgenden Abtastungen am gleichen Punkt auftreten. Während des Abtastens der Bahn (5) werden die Bahn (5) und der Empfänger (7) veranlaßt, in Bezug zueinander eine Relativbewegung durchzuführen, die sich von der durch die normale Fortbewegung der bahn verursachten unterscheidet.

FIG.1.

87-13632/+

## Verfahren und Vorrichtung zur Überprüfung von Bahnmaterial.

Die Erfindung betrifft ein Verfahren zur Überprüfung von Bahnmaterial in der im Oberbegriff des Anspruchs 1 beschriebenen bekannten Weise, sowie eine Vorrichtung der im Oberbegriff des Anspruchs 12 beschriebenen Art.

Vorzugsweise handelt es sich hierbei um mit einem Überzug versehenes Bahnmaterial und insbesondere um ein mit einer Überzugsschicht vorzugsweise durch Gießen versehenes photographisches Material. Übrigens wirkt das meiste bekannte photographische Bahnmaterial lichtstreuend.

Das Anwendungsgebiet photographischer Filme und Papiere erfordert sehr gleichmäßige Überzüge. Die Grenzen für noch zulässige Störungen oder Fehlstellen hängen bei photographischen Bildern von der Vergrößerung ab, mit welcher das Bild auf dem photographischen Erzeugnis betrachtet oder reproduziert werden soll. So ist der visuelle Betrachtungsvorgang besonders dazu befähigt, Streifen (z.B. Gießlinien) im Endbild zu entdecken, und es muß daher sichergestellt werden, daß das Fließen der Beschichtungsflüssigkeit vom Gerät zum Auftragen eines Überzugs auf das Bahnmaterial, z.B. einem Gießapparat, lückenlos und gleichmäßig quer über die Bahnbreite mit Schwankungen von weniger als 2% erfolgt, um die Bildung von solchen unerwünschten Streifen (sog. Gießlinien) zu vermeiden. Andere lineare Defekte wie z.B. Kratzer und Abreibstellen sind ebenfalls unzulässig.

Solche linearen Fehlerstellen können vor allem durch Überstreichen des Bahnmaterials mit einem sehr schmalen Lichtstrahl, insbesondere mit dem Strahl einer Laserquelle, quer zur Bahn festgestellt werden. Dank seiner optischen Eigenschaften modifiziert der Überzug auf der Bahn den gesamten momentanen Lichtstrom bzw. die Energieverteilung des Strahls. Das modifizierte Licht gelangt dann in einen Lichtempfänger, der einen Teil oder das gesamte Licht auf eine Photozelle lenkt, oder es fällt direkt auf die letztere. Diese Photozelle verwandelt nun die optische Energie in ein elektronisches Signal. Die räumliche Anordnung von Bahn und Empfänger zueinander in der erfindungsgemäßen Kombination wird so gewählt, daß optimale Empfindlichkeit gegen Stör- oder Fehlerstellen im Überzug erzielt wird. Die Überprüfung des Bahnmaterials kann dabei im Falle eines zu überprüfenden Filmes mittels durch die überzogene Filmoberfläche durchfallendem oder an ihr reflektiertem Licht erfolgen, oder sie kann im Falle der Überprüfung von mit einer undurchlässigen Trägerschicht versehenem Bahnmaterial nur mittels an der überzogenen Oberfläche refektiertem Licht vorgenommen werden.

Man hat gefunden, daß ein Streifen, insbesondere eine Gießlinie im Überzug am besten durch wiederholtes Sammeln von aus sequentiellen Abtastungen ermittelten Daten entdeckt werden kann. Beim quer zur Bahn erfolgenden Überstreichen derselben durch den Lichtstrahl kann der Streifen als Störung im elektrischen Output des Empfängers, die immer am gleichen Punkt der Abtastung auftritt, festgestellt werden. Dies erfolgt z.B. mittels eines Summationsverfahrens, das in der europäischen Patentanmeldung No. 30520 beschrieben ist. Auch ist bereits ein ähnliches Korrelationsverfahren angewendet worden.

Diese Überprüfungsverfahren haben den Nachteil, daß es schwierig ist, zwischen Streifen oder Schlieren in der inspizierten, sich fortbewegenden Bahn einerseits und stationären Unregelmäßigkeiten in der Photozelle oder in der Optik des Lichtempfängers andererseits zu unterscheiden, in die der modifizierte Lichtstrahl gelangt, bevor er die Photozelle erreicht, wie z.B. Staubteilchen auf den Fenstern oder Herstellungsfehler in der Optik.

- 3 -                                    0079851

In der offengelegten europäischen Patentanmeldung No. 30915 der Anmelderin ist ein Verfahren zum Abtasten von lichtdurchlässigem Bahnmaterial beschrieben, welches die Verwendung eines lichtstreuenden Elements umfaßt, das längs eines mindestens teilweise quer zur Bahnfortbewegungsrichtung verlaufenden Weges bewegt wird. Jedoch ist dieses Verfahren nicht auf Bahnmaterial anwendbar, das bereits selber lichtstreuend wirkt.

Es ist daher eine Aufgabe der vorliegenden Erfindung, ein Überprüfungssystem zu verwirklichen, das gegenüber lokalen Unregelmäßigkeiten im Lichtempfänger unempfindlich ist, aber gleichwohl eine ausreichende Empfindlichkeit gegenüber Streifen oder Schlieren, insbesondere Gießlinien, im zu überprüfenden Material aufweist.

Dies wird gemäß der Erfindung durch ein Verfahren der eingangs beschriebenen Art erreicht, das die im kennzeichnenden Teil des Anspruchs 1 aufgeführten Merkmale aufweist. Während bevorzugt bei der unterschiedlichen Bewegung von Bahn und Lichtempfänger eines der beiden Elemente in einer Ebene bewegt wird, die im wesentlichen parallel zur Durchlaufebene des Abtaststrahls verläuft, kann doch, wenn die Ausrichtung des Lichtempfängers zur Abtastungsebene nicht kritisch ist, der Empfänger auch in anderen Richtungen kontinuierlich bewegt werden, z.B. auch in einer Richtung parallel zur Fortbewegungsrichtung der Bahn, wie dies in den kennzeichnenden Teilen der Unteransprüche 3, 4 und 5 beschrieben ist.

So ergeben, wie bereits bekannt, als Fehler an Überzügen auftretende Streifen oder Schlieren Störungen im elektrischen Output des Lichtempfängers, welche stets am gleichen Punkt der Abtastung auftreten, wobei die Bahnkante in jedem Moment als gemeinsame Bezugslinie betrachtet wird, und die durch Summations- oder Korrelationsverfahren wie beschrieben verstärkt und erfaßt werden. Jedoch werden beim Verfahren nach der vorliegenden Erfindung die durch lokale Unregelmäßigkeiten in der Empfängeroptik hervorgerufenen Signale entweder bei Festlegung der Bahnkante als gemeinsamer Bezugslinie nicht am gleichen Punkt der Abtastung auftreten, oder sie werden nur gelegentlich auftreten, wenn die Unregelmäßigkeit der Abtastung unterliegt. Diese Signale werden entweder auf Grund der Abstände ihrer Stellung bei der Abtastung oder wegen ihres unregelmäßigen Auftretens nicht im gleichen Maße verstärkt werden, wie die durch Streifen oder Schlieren im Überzug verursachten, und können daher von Streifen oder anderen Fehlstellen im Überzug unterschieden werden.

Bei einer anderen Ausführungsform der Erfindung kann der Lichtempfänger im Raum feststehend angeordnet werden, während die Bahnkante in Abhängigkeit von einer kontinuierlich variierten Bezugslinie gesteuert wird, wobei die Variationen vorzugsweise zyklischer Natur sind. Elektrische Signale werden zeitweilig auf einen Puls referenziert, der im Augenblick des Überquerens der Bahnkante durch den Abtaststrahl erzeugt wird.

Auch ist eine Anordnung möglich, in welcher sowohl die die Bahn steuernde Meßzahl als auch der Empfänger in Richtungen hin- und herbewegt werden, die zur Abtastebene im wesentlichen parallel verlaufen.

Bei einer anderen Ausführungsform der Erfindung werden Empfänger und Bahn nur dann relativ zu einander, wie oben beschrieben, in eine seitlich oszillierende Bewegung versetzt, wenn ein von einem Streifen oder einer Schliere herrührendes Signal zuerst betrachtet wird und ein Warnsignal auslöst. Diese Arbeitsweise kann als Test dienen, um sicherzustellen, daß keine irrtümliche Aufzeichnung von Fehlerstellen erfolgt.

Weitere bevorzugte Merkmale des Verfahrens nach der Erfindung sind in den Unteransprüchen 6 bis 11 beschrieben. Die Anordnung nach Anspruch 7 bietet den Vorteil, daß keine gleitende Oberfläche einer besonderen Abnutzung und Staubbildung unterliegt. Bei geeigneter Anregung veranlassen die Blattfedern dieser Anordnung eine Hin- und Herbewegung des Empfängers mit einer durch die Biegeeigenschaften der Federn und die Masse des Empfängers bestimmten Frequenz.

Wie in Anspruch 8 beschrieben, kann die mechanische Anregung mittels eines Solenoids zum Zwecke der Stoßanregung oder mittels eines elektromagnetischen Vibrators oder Oszillators von jenem Typ erfolgen, der auch zum Antrieb einer elektrisch angeregten Stimmgabel verwendet wird.

Ein anderer Aspekt der Erfindung betrifft nun die eingangs erwähnte Vorrichtung, die erfindungsgemäß diejenigen Merkmale aufweist, die im kennzeichnenden Teil des Anspruchs 12 beschrieben sind.

Bevorzugte Ausführungsformen dieser Vorrichtung weisen mindestens eines der in den Unteransprüchen 13 bis 18 beschriebenen Merkmale auf.

Weitere Einzelheiten und Vorteile des Verfahrens nach der Erfindung zur Überprüfung von Bahnmaterial und der Vorrichtung zu dessen Durchführung sind aus der folgenden Beschreibung unter Bezugnahme auf die beigefügte Zeichnung ersichtlich, in welcher

Fig. 1 eine schematische, perspektivische Darstellung der Hauptelemente einer Lichtabtastvorrichtung bekannter Art für die Inspektion der Bahn mittels durch die letztere durchfallendem Licht, wobei aber der Lichtempfänger erfindungsgemäß bewegt wird;

Fig. 2 eine ähnliche Darstellung für die Inspektion der Bahn mittels von der letzteren reflektiertem Licht, wobei aber der Empfänger erfindungsgemäß bewegt wird;

Fig. 3 eine Lichtempfängeranordnung in einer gemäß der Erfindung ausgestalteten Vorrichtung, in welcher die Hin- und Herbewegung des Empfängers durch einen in einem Kardanstein rotierenden Exzenter bewerkstelligt wird.

Fig. 4 eine von Blattfedern getragene Empfängeranordnung und

Fig. 5 eine Einrichtung zur gesteuerten Hin- und Herbewegung der Bahnkanten quer zur Bahnförderrichtung mittels einer oszillierenden Walzenlagerung

zeigen.

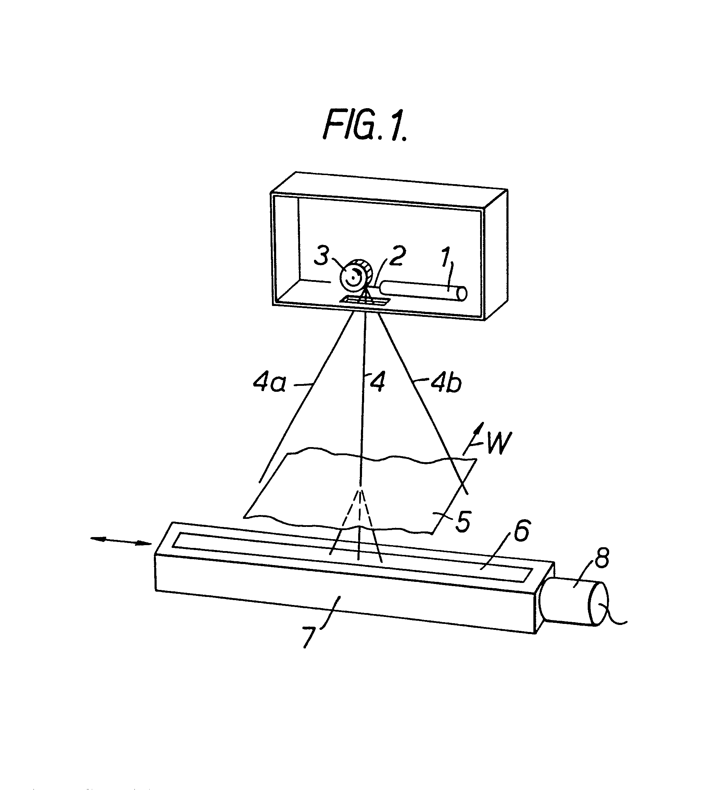

In der Abtastvorrichtung nach Fig. 1 wirft ein Laser 1 einen Lichtstrahl 2 auf eine rotierende mit vielen Facetten versehene Spiegeltrommel 3, von welcher der reflektierte Abtaststrahl 4 ausgeht, der den zwischen den Grenzstrahlen 4a und 4b festgelegten Bereich überstreicht und dabei den zwischen den Auftreffpunkten der Grenzlichtpfade 4a und 4b auf die Bahn 5 gelegenen Bahnstreifen so abtastet, daß der Auftreffpunkt des Strahles 4 die Bahn 5 in einer Richtung senkrecht zu derjenigen überquert, in der die Bahn sich fortbewegt und die in Fig. 1 durch den Pfeil W angedeutet ist. Der Abtaststrahl 4 wird durch die Bahn 5 modifiziert und von ihr teilweise durchgelassen, um in das Fenster 6 des mit einer Photozelle 8 ausgestatteten Empfängers 7 einzufallen.

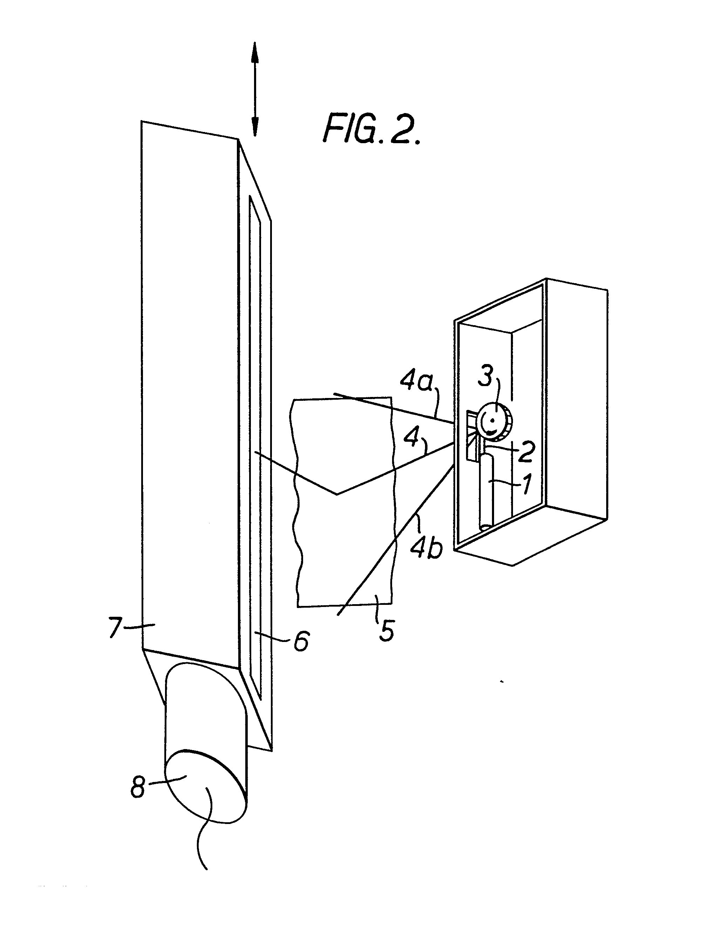

In Fig. 2 wird die Bahn 5 ebenfalls durch den auf sie fallenden Strahl 4 zwischen den Grenzpfaden 4a und 4b abgetastet. Der Abtaststrahl 4 wird dabei modifiziert und teilweise von der Bahn 5 reflektiert, so daß er in das Fenster 6 des Empfängers 7 einfällt.

Nach der Erfindung ist nun der Empfänger 7 so ausgebildet, daß er während des Abtastens durch den Strahl 4 eine Hin- und Herbewegung ausführt, die in den Figuren 1 und 2 durch einen Doppelpfeil angedeutet ist. Durch diese Hin- und Herbewegung des Empfängers 7 erscheinen alle Störungen im Output-Signal, die durch Unregelmäßigkeiten im Empfänger 7 oder in dessen Photozelle 8 auftreten können, an verschiedenen Punkten in den aufeinander folgenden Durchläufen des Abtaststrahls 4 beim Überstreichen der Bahn 5. Diese Unregelmäßigkeiten können so deutlich von Streifen oder Schlieren im Überzug der Bahn 5 unterschieden werden. Diese Unterscheidung kann durch Beobachtung der Wellenform des Stromes der Photozelle auf einem mit den Durchläufen des Abtaststrahls 4 synchronisierten Oszilloskop erfolgen. Im Oszilloskopbild erscheint ein echter Streifen oder eine andere Fehlstelle im Bahnüberzug als stationäre Störung der Wellenform, während Unregelmäßigkeiten im Empfänger Störungen hervorrufen, die im Takt mit der Bewegung desselben wandern.

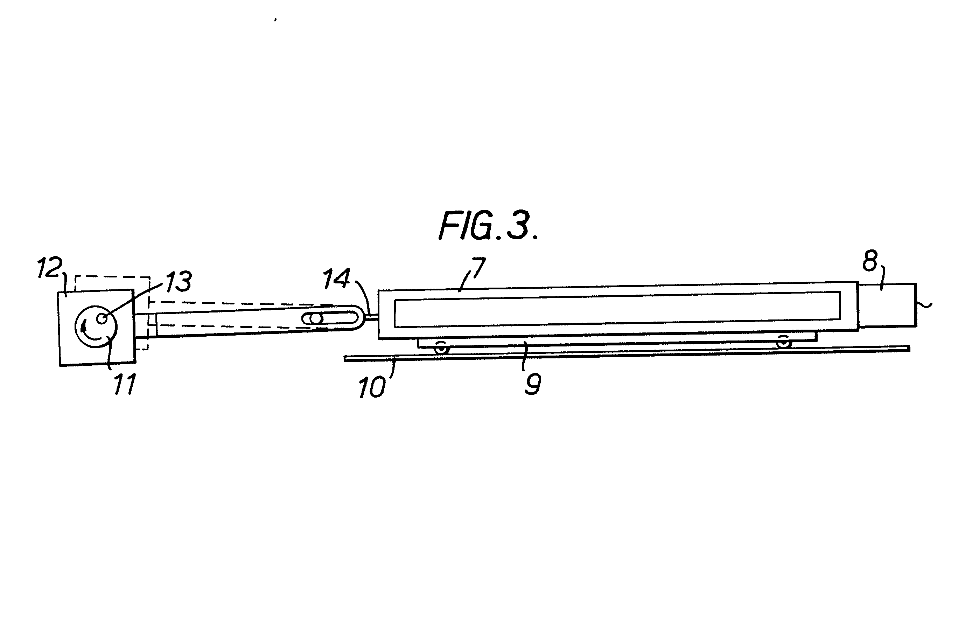

Fig. 3 zeigt einen Mechanismus, um den auf einer auf Schienen 10 laufenden Katze 9 montierten Empfänger 7 hin- und herzubewegen. Dieser Mechanismus umfaßt eine Exzenterscheibe 11, welche in einem Kardanstein 12 um eine Welle 13 rotiert, wobei die exzentrische Bewegung über eine Gelenkverbindung 14 vom Kardangetriebe auf die Katze 9 übertragen wird und diese dem Exzenterhub entsprechend hin- und herbewegt.

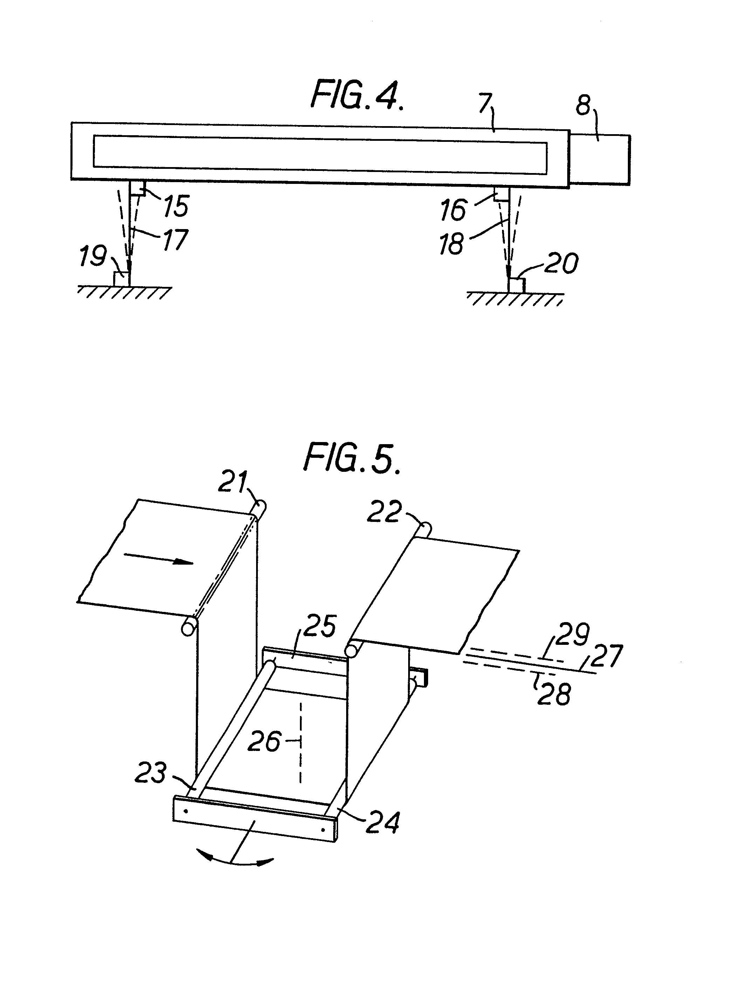

In der Fig. 4 ist eine alternative Ausführungsform gezeigt, in welcher der Lichtempfänger 7 auf seiner Unterseite mit Blöcken 15 und 16 versehen ist, welche mit den oberen, beweglichen Enden von Blattfedern 17 und 18 in Eingriff stehen, deren untere Enden in feststehenden Blöcken 19 und 20 fest verankert sind. Der Empfänger 7 kann so nur in einer praktisch zur Längsachse des Eintrittsfensters 6 parellelen und damit quer, und vorzugsweise unter einem rechten Winkel zur Bahnbewegungsrichtung W verlaufenden Richtung hin- und herschwingen. Die Ausführungsform der beweglichen Anordnung des Empfängers 7 arbeitet fast ohne Reibung. Der Empfänger 7 kann z.B. unter der Wirkung einer Solenoidspule in Bewegung gesetzt werden.

Die Fig. 5 zeigt eine weitere Ausführungsform der Anordnung nach der Erfindung, in welcher der Empfänger 7 (nicht gezeigt, aber zwischen in stationären Lagern vorzugsweise drehbar gelagerten Umlenkwalzen 21 und 22 über oder unter der Bahn 5 oder auch rechts neben der Walze 22 über der Bahn 5 zu denken) im Raum feststeht und die Bahnkante, z.B. 27, in einer zu der Richtung ihrer Fortbewegung bzw. zur Bahnlängsachse B durch seitliches Angreifen quer gerichteten Oszillation hin- und hergelenkt wird.

Dies kann z.B. durch die Verwendung von zwei fest gelagerten Walzen 21 und 22 und zwei beweglichen, in einem
Rahmen 25 gelagerten Walzen 23 und 24 erreicht werden. Der
Rahmen kann über einen begrenzten Bogenbereich um einen
Drehpunkt 26 hin- und hergeschwenkt werden, wodurch die
Bahnkante 27 zwischen den beiden Endstellungen 28 und 29
hin und her oszillieren kann. Hierdurch können wiederum
Störeffekte, die von einer echten Fehlstelle in der Bahn,
z.B. einer Gießlinie oder sonstigen Streifen, Schlieren,
Kratzern und dergl. herrühren, von durch Unregelmäßigkeiten
im Lichtempfänger 7 verursachten Störeffekten unterschieden
werden.

Patentansprüche.

1. Verfahren zur Überprüfung eines in Richtung (W) seiner Längsachse (B) geförderten Bahnmaterials, wobei das Bahnmaterial kontinuierlich quer zur Bahnlängsachse (B) mittels eines Abtastlichtstrahls (4) abgetastet wird, und von der Bahn (5) reflektierte oder durchgelassene Lichtsignale in einem mit einer Photozelle (6) versehenen Lichtempfänger (7) gesammelt werden, wobei die Photozelle (6) die optische Energie des eingefallenen Lichtes in ein elektronisches Signal umwandelt und wobei die von sequentiellen Durchläufen des Abtaststrahls herrührende elektronische Information gespeichert und Störungen im vom Lichtempfänger (7) stammenden elektrischen Output, welche in mehreren aufeinanderfolgenden Abtastdurchläufen im gleichen Punkt auftreten, erfaßt werden, d a d u r c h   g e k e n n z e i c h - n e t, daß während der Abtastung der Bahn (5) diese und der Lichtempfänger (7) zueinander in eine kontinuierliche, von der normalen Fortbewegung der Bahn (5) verschiedene Relativbewegung versetzt werden.

2. Verfahren nach Anspruch 1, dadurch gekennzeichnet, daß bei der unterschiedlichen Bewegung von Bahn (5) und Lichtempfänger (7) eines der beiden Elemente (5, 7) in einer Ebene bewegt wird, die im wesentlichen parallel zur Durchlaufebene des Abtaststrahls (4) verläuft.

3. Verfahren nach Anspruch 1 oder 2, dadurch gekennzeichnet, daß die Relativbewegung eine periodische ist, und daß die maximale Verschiebung des bewegten Elements (5,7) die wirksame Dimension der stärksten in einer Richtung quer zur Bahnlängsachse (B) gemessenen Unregelmäßigkeit, die im Lichtempfänger (7) auftreten kann, übertrifft.

4. Verfahren nach Anspruch 1, dadurch gekennzeichnet, daß die Ausrichtung der vom Abtaststrahl (4) durchlaufenen Ebene auf den Lichtempfänger (7) unkritisch ist, und daß der Lichtempfänger (7) kontinuierlich in einer Richtung bewegt wird, die von einer der genannten Ebene parallelen wesentlich abweicht, wobei die maximale Lageverschiebung des Lichtempfängers (7) die effektive Größe der stärksten, in der genannten Richtung der Empfängerverschiebung gemessenen Unregelmäßigkeit, die im Empfänger (7) auftreten kann, übertrifft.

5. Verfahren nach einem der Ansprüche 1 bis 3, dadurch gekennzeichnet, daß die Bahnlängsachse(B) im Raum stationär ist und daß der Lichtempfänger (7) kontinuierlich längs eines mit der Abtastebene im wesentlichen parallelen Weges hin- und her bewegt wird.

6. Verfahren nach Anspruch 5, dadurch gekennzeichnet, daß der Lichtempfänger (7) mittels der Drehung einer Exzentereinrichtung (11) in einem Kardanblock (12) in Bewegung versetzt wird.

7. Verfahren nach Anspruch 5, dadurch gekennzeichnet, daß der Lichtempfänger (7) durch die Vibration von Blattfedern (17, 18) in Bewegung versetzt wird, auf welchen er so montiert ist, daß sie unter einem rechten Winkel zur Längsachse des Einfallsfensters (6) des Empfängers (7) angeordnet sind.

8. Verfahren nach Anspruch 7, dadurch gekennzeichnet, daß die Blattfedern (17, 18) mittels eines Solenoids oder elektromagnetischen Vibrators in Vibration versetzt werden.

9. Verfahren nach einem der Ansprüche 1 bis 4, dadurch gekennzeichnet, daß der Empfänger (7) stationär angebracht ist und daß die Bahn (5) mittels Schaukelbewegung einer Walzenlagerung (21, 22, 23, 24) um eine Schwenkachse (26) seitlich hin und her bewegt wird.

10. Verfahren nach einem der Ansprüche 1 bis 4, dadurch gekennzeichnet, daß der Lichtempfänger (7) stationär gelagert ist und daß die Bahn (5) einer automatischen Steuerung unterworfen wird, bei welcher ein einen Momentanmeßwert bildender Kantenfühler quer zur Bahnlängsachse (B) hin und her bewegt wird.

11. Verfahren nach einem der Ansprüche 1 bis 10, dadurch gekennzeichnet, daß der Lichtempfänger (7) und die Bahn (5) nur dann in eine in Bezug zu einander in eine seitwärts gerichtete Relativbewegung versetzt werden kann, wenn ein von einer Fehlstelle, insbesondere einer Gießlinie auf der Bahn (5) erzeugtes Signal zunächst beobachtet wird und dann einen Alarm auslöst.

12. Abtastvorrichtung zum Überprüfen eines in Richtung (W) seiner Längsachse (B) beförderten Bahnmaterials, die eine Einrichtung zur Beförderung der Bahn vorbei an einer Abtaststation, in welcher ein Lichtabtaststrahl (4) die Bahn (5) kontinuierlich überstreicht, einen Lichtempfänger (7) zum Sammeln der von der Bahn (5) reflektierten oder durchgelassenen Lichtsignale, einer an den Lichtempfänger (7) angeschlossenen Photozelle (6), welche die optische Energie in ein elektronisches Signal umwandelt, einer Speichereinrichtung zum Speichern von sequentiellen Abtastungen erzeugter elektronischer Signalinformation, Detektormitteln zum Erfassen von Störungen im elektrischen Empfängeroutput, die am gleichen Punkt in mehreren aufeinander folgenden Abtastungsdurchläufen auftreten, dadurch gekennzeichnet, daß die Vorrichtung Mittel umfaßt, durch welche die Bahn (5) und/oder der Empfänger (7) während der Abtastung der Bahn (5) in eine

kontinuierliche, in Bezug aufeinander unterschiedliche Bewegung versetzt werden, welche sich von der normalen Transportbewegung der Bahn (5) unterscheidet.

13. Vorrichtung nach Anspruch 12, dadurch gekennzeichnet, daß Bewegungsmittel (11-13, 17, 18) vorgesehen sind, die den Empfänger (7) kontinuierlich längs eines im wesentlichen zur Abtastebene parallelen Weges hin- und her bewegen, und daß die Bahntransporteinrichtung die Bahnlängsachse (B) im Raume stationär hält.

14. Vorrichtung nach Anspruch 13, dadurch gekennzeichnet, daß die Bewegungsmittel (11-13, 17, 18) einen Exzenter (11), in einem Kardanstein (12) umfassen, wobei der Exzenter rotierbar gelagert ist.

15. Vorrichtung nach Anspruch 13, dadurch gekennzeichnet, daß die Bewegungsmittel Blattfedern (17, 18) umfassen, auf denen der Empfänger (7) gelagert ist, die zur Längsachse des Eintrittsfensters (6) des Empfängers (7) senkrecht stehen, sowie Mittel umfaßt, die geeignet sind, die Blattfedern (17, 18) in Schwingung zu versetzen.

16. Vorrichtung nach Anspruch 15, dadurch gekennzeichnet, daß die Mittel zum Inschwingungversetzen der Blattfedern (17, 18) einen Solenoid oder einen elektromagnetischen Vibrator umfassen.

17. Vorrichtung nach Anspruch 12, dadurch gekennzeichnet, daß eine Schaukeleinrichtung vorgesehen ist, die eine Walzeneinrichtung (21-25), mittels welcher die Bahn (5) umgelenkt wird, um eine Drehachse in Hin- und Herbewegung versetzt wird und die so mit der Bahnbeförderungseinrichtung verbunden ist, daß die Bahn (5) hierdurch von Seite zu Seite quer zur Fortbewegungsrichtung (W) geschwenkt wird.

# FIG.1.

FIG.2.

FIG.3.

FIG.4.

FIG.5.

Europäisches
Patentamt

**EUROPÄISCHER RECHERCHENBERICHT**

**0079851**
Nummer der Anmeldung

EP 82 81 0460

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | G 01 N 21/89 |
| X | DE-A-1 473 743 (EASTMAN KODAK CORP.) <br><br> * Ansprüche 1, 2, 10; Seite 10, Zeile 22 - Seite 11, Zeile 8; Seite 19, Zeile 17 - Seite 20, Zeile 3; Figuren 2, 8 * | 1-3,5, 6,12-14 | |
| | --- | | |
| D,X | EP-A-0 030 915 (CIBA-GEIBY AG) <br><br> * Ansprüche 1, 6; Seite 7, Zeilen 13-27; Figuren 2, 3 * | 1,7,8, 12,15, 16 | |
| D,A | <br> * Ansprüche 1-5; Seite 7, Zeile 28 - Seite 8, Zeile 10; Figur 4 * | 5,6,13 ,14 | |
| | | | RECHERCHIERTE SACHGEBIETE (Int. Cl. ³) |
| | --- | | |
| A | EP-A-0 010 791 (AGFA-GEVAERT) <br><br> * Anspruch 8; Seite 8, Zeile 12 - Seite 9, Zeile 21; Figuren 1, 2 * | 1,6,12 ,14 | G 01 N 21/00 |
| | --- | | |
| A | US-A-4 226 538 (W.P. VAN BEECK) <br><br> * Ansprüche 1, 9-11; Zusammenfassung; Spalte 3, Zeile 61 - Spalte 4, Zeile 56; Figuren 1, 2 * | 1,6,12 ,14 | |
| | ----- | | |

Der vorliegende Recherchenbericht wurde für alle Patentansprüche erstellt.

| Recherchenort <br> BERLIN | Abschlußdatum der Recherche <br> 27-01-1983 | Prüfer <br> HOFMANN D G |
|---|---|---|